Europäisches Patentamt

European Patent Office

Office européen des brevets

(19)

(11) **EP 1 086 931 A1**

(12) **EUROPEAN PATENT APPLICATION**

(43) Date of publication:
**28.03.2001 Bulletin 2001/13**

(51) Int Cl.$^7$: **C03C 15/00**

(21) Application number: **00402646.4**

(22) Date of filing: **25.09.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **27.09.1999 JP 27199799**

(71) Applicant: **Nippon Sheet Glass Co., Ltd.
Osaka-shi, Osaka 541-0045 (JP)**

(72) Inventors:
• **Kuzuwa, Sadao, c/o Nippon Sheet Glass Co., Ltd.
Osaka-shi, Osaka 541-0045 (JP)**
• **Sakata, Nobuhiro,
c/o Nippon Sheet Glass Co., Ltd.
Osaka-shi, Osaka 541-0045 (JP)**

(74) Representative: **Uchida, Kenji et al
S.A. Fedit-Loriot et Autres Conseils en Propriété
Industrielle,
38, avenue Hoche
75008 Paris (FR)**

(54) **Method of manufacturing a glass substrate for displays and a glass substrate for displays manufactured by same**

(57) A method of manufacturing a glass substrate for displays is provided, which allows efficient and inexpensive removal of at least a reducing heterogeneous layer formed on the top surface of the glass substrate, and a glass substrate for displays manufactured by the same method. A glass substrate is prepared by the float method. The reducing heterogeneous layer formed on the top surface of the glass substrate is removed by etching using an etchant which is mainly composed of hydrofluoric acid.

*FIG.2A*

EP 1 086 931 A1

# *FIG.2B*

**Description**

BACKGROUND OF THE INVENTION

Field of the Invention

The present invention relates to a method of manufacturing a glass substrate for displays and a glass substrate for displays manufactured by the same method.

Prior Art

Glass substrates for displays for use in plasma display panels (PDPs), electron beam-excited display (including field emission displays (FEDs) and surface-conduction electron-emitter devices (SEDs)) or the like are made from sheet glass which is prepared by the float method. According to the float method, sheet glass is prepared by floating molten glass on a molten bath of tin, for example, which allows reliable and inexpensive mass production of a large-area sheet glass. Therefore, the float method is suitable for manufacturing glass substrates for displays such as PDPs and FEDs, which require a large display area of 40 inches, for example, in the case of PDPs, and are mass produced.

During manufacture of sheet glass using the float method, the bottom surface (the lower surface of the sheet glass) comes into contact with the molten tin in the float bath, and the top surface (the upper surface of the sheet glass) is exposed to steam of the molten tin. Consequently, metal components penetrate as ions into the surface layers of both the bottom surface and the top surface, to form reducing heterogeneous layers.

On the other hand, plasma displays (PDPs) are conventionally manufactured by the following method: First, a glass substrate for a front panel and a glass substrate for a back panel are arranged in opposed relation to each other, and then a metal paste of silver (Ag) or the like, and an insulating paste are applied to the inner surfaces of these glass substrates, followed by burning the inner surfaces, to thereby form metal electrodes of silver or the like, dielectric layers, partition walls, and fluorescent elements etc. Next, the glass substrate for the front panel and the glass substrate for the back panel are sealed together with a bonding glass having a low melting point, and then a mixed gas of xenon and a main discharge gas of neon are charged into the resulting display, followed by sealing the display in an airtight manner.

In general, the metal electrodes, for example, silver electrodes, are formed as electrode films on the inner surfaces of the glass substrates by a film-forming method such as the screen printing method which is inexpensive. However, during the formation of the electrodes by this method, the silver component of the silver electrodes reacts with tin present in the reducing heterogeneous layers on the surfaces of the glass substrates, to form a colloidal metal. As a result, coloring occurs not just on the electrodes but also on their neighboring parts, which spoils the display performance of the plasma display in terms of transparency, color balance, etc.

Therefore, conventionally, to prevent coloring from occurring during the formation of the silver electrode film, a $SiO_2$ barrier layer is formed on the reducing heterogeneous layer by sputtering, CVD or the like, in order to suppress the effects of silver, or a glass substrate having a special glass composition is used which does not form a reducing heterogeneous layer during the manufacture of the sheet glass by the float method. However, the formation of the barrier layer has several problems: First, it does not only require equipment such as a sputtering device and a CVD device, resulting in a high manufacturing cost as well as a high maintenance cost, but also the barrier layer is not so reliable as to fully prevent coloring. Besides, the degree of adhesion of the barrier layer to the silver electrode is sometimes not sufficient. Further, when a glass substrate having a low alkali content, for example, is used as the above glass substrate having a special composition, further studies are required to obtain a suitable low-alkali composition and the glass matrix of the float furnace has to be changed accordingly, which results in a high manufacturing cost.

Therefore, to prevent coloring, there has been usually employed a method of removing the reducing heterogeneous layer formed on the surface of the glass substrate prepared by the the float method, on which silver electrodes are to be formed, by grinding by approximately 10 to 100 μm using a grinding machine (e.g. Japanese Laid-Open Patent Publication (Kokai) No. 10-255669).

Further, Japanese Laid-Open Patent Publication (Kokai) No. 10-144208 discloses a chemical grinding method as an alternative to the above mechanical grinding method, which removes the reducing heterogeneous layer (tin containing layer) of the glass surface by etching using a mixed aqueous solution of hydrogen peroxide and 1-hydrogen-2-ammonium fluoride.

However, if the surface of the glass substrate is abraded by the above grinding machine, using cerium oxide as an abrasive, it takes at least 30 minutes to grind by 10μm, which is time consuming. Further, when an Oscar grinding machine is used, a grinding surface plate which is twice or more the size of the glass substrate to be abraded, is required. It is difficult to maintain the flatness of such large surface plate, and further, a central portion of the glass substrate is difficult to grind, while peripheral portions of the same is easy to grind, which makes it difficult to evenly grind the whole glass substrate.

Also, the above chemical grinding method has the disadvantage that the rate at which the glass is ground by etching is so low, i.e., approximately 0.5 µm/min, that a considerable period of time is required to remove the reducing heterogeneous layer, thus being uneconomical. Further, hydrogen peroxide, which becomes active upon reaction, is used as the etchant, and therefore the etchant is not stable. In addition, a mixed aqueous solution of 1-hydrogen-2-ammonium fluoride is used as an alternative etchant, and hence a fluoride compound can be easily formed on the glass surface.

SUMMARY OF THE INVENTION

It is therefore an object of the present invention to provide a method of manufacturing a glass substrate for displays, which is capable of allowing efficient and inexpensive removal of at least a reducing heterogeneous layer formed on the top surface of the glass substrate, and a glass substrate for displays manufactured by the same method.

To attain the above object, the present invention provides a method of manufacturing a glass substrate for displays, comprising the steps of preparing a glass substrate having surfaces including an upper surface and a lower surface by a float method, and removing at least a reducing heterogeneous layer formed on the upper surface of the glass substrate, out of reducing heterogeneous layers formed on the surfaces of the glass substrate, by etching using an etchant which is mainly composed of hydrofluoric acid.

Generally, during the formation of glass substrates by the float method, a reducing heterogeneous layer having a thickness of at least 100µm is formed on the bottom surface (lower surface of the glass substrate), and a reducing heterogeneous layer having a thickness of at least 5µm is formed on the top surface (upper surface of the glass substrate). The glass substrates are then cut into a predetermined size to thereby produce glass substrates for displays. Since the bottom surface of the substrate for displays has a larger reducing heterogeneous layer thickness, and further, can have more scratches and adherence of foreign matter, the top surface which has a smaller reducing heterogeneous layer thickness is used as the surface for forming metal electrodes for displays.

According to the method of the present invention, it is possible to remove the reducing heterogeneous layer from at least the top surface of the glass substrate in an efficient manner without using a grinding machine, and the removal of the reducing heterogeneous layer requires simpler equipment than a grinding machine. Moreover, it is possible to easily change the depth of removal of the reducing heterogeneous layer.

Preferably, the reducing heterogeneous layer is removed by a depth of 5 to 14µm.

More preferably, the reducing heterogeneous layer is removed by a depth of 6 to 11µm.

As a result, it is possible to completely remove the reducing heterogeneous layer in a reliable manner, and further, to positively prevent the surface of the glass substrate from becoming rough.

In a preferred form of the present invention, the etching comprises dipping the glass substrate in the etchant.

As a result, the reducing heterogeneous layer can be efficiently removed from the whole glass substrate by using simple etching equipment.

Preferably, the etchant has a temperature between 10 to 30°C.

As a result, uneven etching can be prevented while maintaining the etching rate at a suitable value.

In a preferred form of the present invention, the etching comprises spraying the etchant at least on the upper surface of the glass substrate.

As a result, the reducing heterogeneous layer from at least the upper surface of the glass substrate can be removed in an efficient manner using simple equipment.

In a preferred form of the present invention, the method of manufacturing a glass substrate for displays further includes a step of coating the lower surface of the glass substrate with an adhesive film prior to the removing step, to thereby remove only the reducing heterogeneous layer formed on the upper surface of the glass substrate.

As a result, microscopic scratches due to etching can be prevented from developing on the bottom surface, and further, the mechanical strength of the glass substrate can be prevented from lowering.

Preferably, the etchant comprises a hydrofluoric acid solution having a hydrofluoric acid concentration of 1 to 25%.

As a result, a drastic reaction can be prevented while maintaining the etching rate at a suitable value. In addition, it is possible to prevent the deterioration of the environment in which the equipment operates.

In another preferred form of the present invention, the glass substrate has a composition, by weight %, of 50 to 75% of $SiO_2$, 10 to 27% of RO, 1 to 15% of $Al_2O_3$, and 2 to 15% of $Na_2O$.

As a result, when the glass substrate is etched in a float bath, it can have flat planar surfaces, and the reducing heterogeneous layer can be removed while maintaining smooth surfaces of the glass substrate.

Further, the present invention provides a glass substrate for displays manufactured by preparing a glass substrate having surfaces including an upper surface by a float method, and removing at least a reducing heterogeneous layer formed on the upper surface of the glass substrate, out of reducing heterogeneous layers formed on the surfaces of the glass substrate, by etching using an etchant which is mainly composed of hydrofluoric acid.

As a result, it is possible to provide a glass substrate for displays which has a smooth and flat surface at a low cost.

Preferably, only the reducing heterogeneous layer formed on the upper surface of the glass substrate is removed.

As a result, it is possible to provide a glass substrate for displays which has only the reducing heterogeneous layer formed on the top surface removed.

Preferably, the glass substrate has a composition, by weight %, of 50 to 75% of $SiO_2$, 10 to 27% of RO, 1 to 15% of $Al_2O_3$, and 2 to 15% of $Na_2O$.

As a result, when the glass substrate is etched in a float bath, it can have flat planar surfaces, and the reducing heterogeneous layer can be removed while maintaining smooth surfaces of the glass substrate.

Further, a glass substrate for displays according to the present invention manufactured by the above method is used for plasma display panels.

As a result, it is possible to provide a glass substrate suitable for use in plasma display panels.

The above and other objects, features and advantages of the invention will become more apparent from the following detailed description taken in conjunction with the accompanying drawings.

BRIEF DESCRIPTION OF THE DRAWINGS

FIG. 1 is a cross-sectional view of a glass substrate for displays according to an embodiment of the present invention;

FIGS. 2A and 2B are schematic views useful in explaining how glass substrates prepared by the float method are dipped in an etchant to remove reducing heterogeneous layers, according to an embodiment of the method of the present invention, in which:

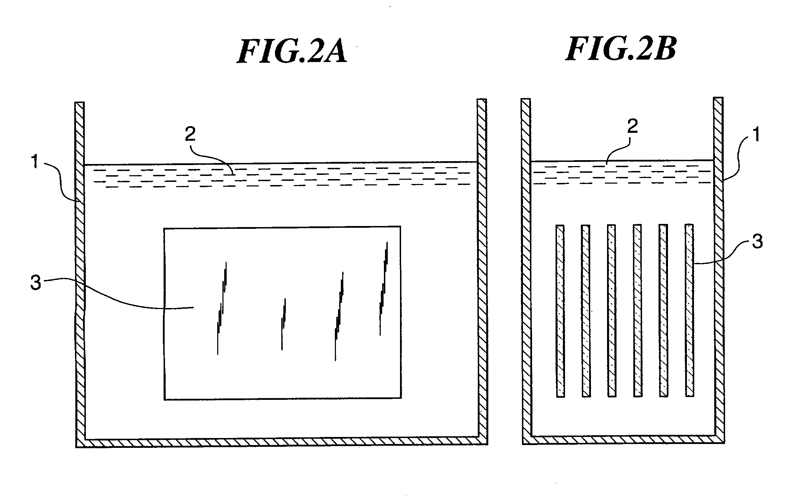

FIG. 2A is an axial sectional view showing the configuration of an etchant dipping apparatus; and;

FIG. 2B is a transverse sectional view showing the configuration of the same apparatus;

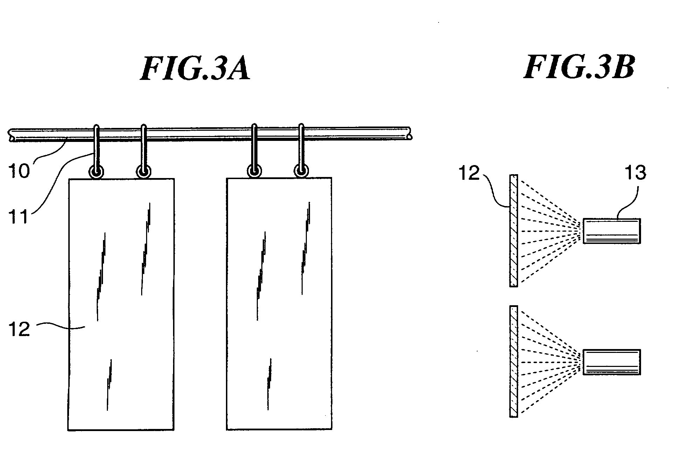

FIGS. 3A and 3B are schematic views useful in explaining how glass substrates prepared by the float method are sprayed with an etchant to remove reducing heterogeneous layers, according to another embodiment of the method of the present invention, in which:

FIG. 3A is a view showing the glass substrates suspended from a support rod of an etchant spraying apparatus; and

FIG. 3B is a view showing the glass substrates and spray nozzles;

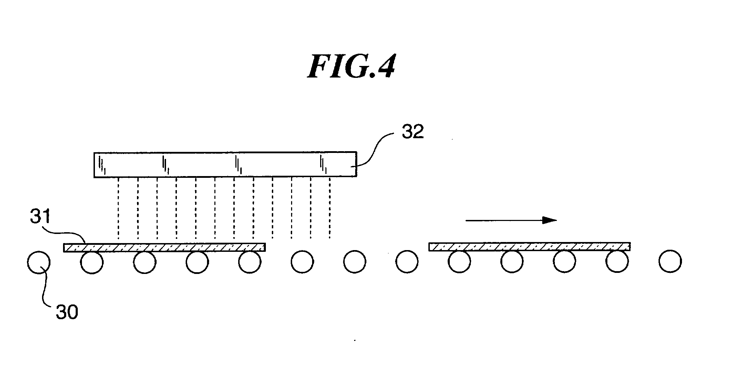

FIG. 4 is a schematic view useful in explaining how glass substrates prepared by the float method are sprayed with an etchant to remove reducing heterogeneous layers, according to still another embodiment of the method of the present invention; and

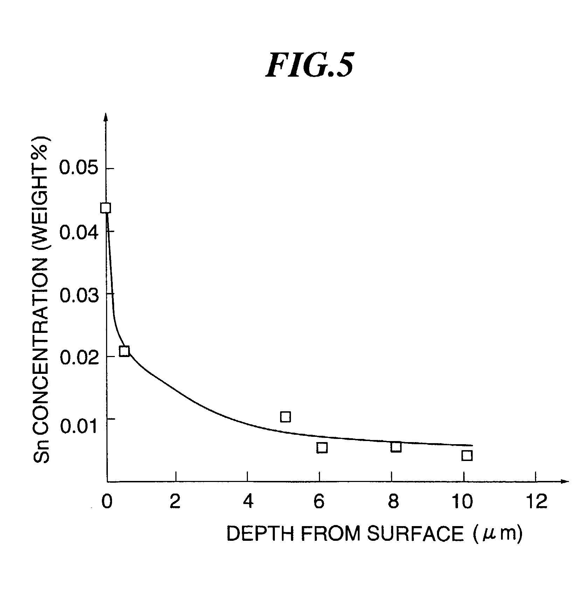

FIG. 5 is a graph showing results of a measurement of the concentration of tin (Sn) present in the vicinity of a top surface of a glass substrate B, using the secondary ion mass spectrometer (SIMS) method.

DETAILED DESCRIPTION

The present invention will now be described in detail with reference to the drawings showing preferred embodiments thereof.

To attain the above object, the present inventors conducted extensive studies and reached a finding that if, out of reducing heterogeneous layers formed on the surfaces of a glass substrate prepared by the float method, at least a reducing heterogeneous layer formed on the top surface of the glass substrate is removed by etching using an etchant which is mainly composed of hydrofluoric acid, it is possible to remove at least the reducing heterogeneous layer from the top surface of the glass substrate in an efficient manner without using a grinding machine, and the removal of the reducing heterogeneous layer requires simpler equipment than a grinding machine. Moreover, it was found that it is possible to easily change the depth of removal of the reducing heterogeneous layer.

The present invention is based upon the above findings.

The method of manufacturing a glass substrate for displays according to an embodiment of the present invention will now be described in detail with reference to the drawings.

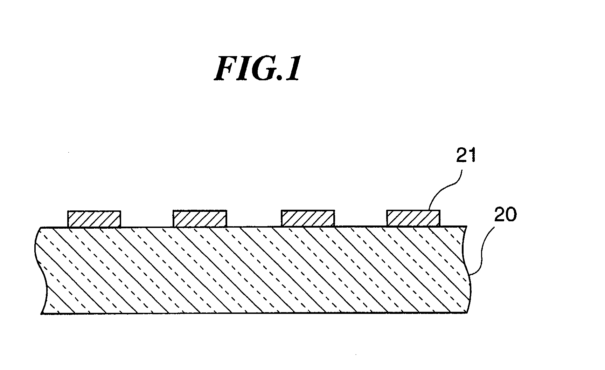

FIG. 1 is a cross-sectional view of a glass substrate for displays according to an embodiment of the present invention.

In FIG. 1, numeral 20 designates a glass substrate which has a top surface on which metal electrodes 21 are formed.

Glass substrates which are employed for manufacturing glass substrates for displays by the manufacturing method according to an embodiment of the present invention are prepared by the float method. According to the float method, sheet glass is prepared by floating molten glass in a molten tin bath. During the formation of the sheet glass by this float method, a lower surface (bottom surface) of the glass substrate comes into contact with the molten tin bath, while an upper surface (top surface) of the glass substrate is exposed to a reducing atmosphere containing tin steam. As a result, a reducing heterogeneous layer (containing tin) having a thickness of at least 100μm is formed on the bottom surface, and a reducing heterogeneous layer (containing tin) having a thickness of at least 5μm is formed on the top surface. The sheet glass prepared as above is cut into a predetermined size to thereby produce glass substrates for displays.

Since the bottom surface of the above substrate for displays thus has a larger reducing heterogeneous layer thickness, and further, can have more scratches and adherence of foreign matter, it was found that the top surface which has a smaller reducing heterogeneous layer thickness is a suitable surface for forming metal electrodes for displays.

On the other hand, as noted before, plasma displays (PDPs) are conventionally manufactured by the following method: First, a glass substrate for a front panel and a glass substrate for a back panel are arranged in opposed relation to each other, and then a metal paste of silver (Ag) or the like, and an insulating paste are applied to the inner surfaces of these glass substrates, followed by burning the inner surfaces, to thereby form metal electrodes of silver or the like, dielectric layers, partition walls, and fluorescent elements etc. Next, the glass substrate for the front panel and the glass substrate for the back panel are sealed together with a bonding glass having a low melting point, and then a mixed gas of xenon and a main discharge gas of neon is charged into the resulting display, followed by sealing the display in an airtight manner.

As also noted before, in general, the metal electrodes, for example, silver electrodes, are formed as electrode films on the inner surfaces of the glass substrates by a film-forming method such as the screen printing method which is inexpensive. However, during the formation of the electrodes by this method, the silver component of the silver electrodes is reduced by the reducing heterogeneous layer (containing tin) of the surface of the glass substrate, as expressed by the following chemical formula, to form a colloidal metal. As a result, coloring occurs not just on the electrodes but also on their neighboring parts:

$$2Ag^+ + Sn^{2+} \rightarrow Ag(colloid) + Sn^{4+}$$

This spoils the display performance of the plasma display in terms of transparency, color balance, etc.

Therefore, according to the present embodiment, in order to prevent coloring during formation of the silver electrode film, the reducing heterogeneous layer formed on a surface of a glass substrate prepared by the the float process, on which silver electrodes are to be formed, is removed by etching under conditions described below.

FIGS. 2A and 2B are schematic views useful in explaining how glass substrates prepared by the float method are dipped in an etchant to remove reducing heterogeneous layers, according to an embodiment of the method of the present invention.

In FIGS. 2A and 2B, reference numeral 1 designates a bath which is filled with an etchant 2 composed of a hydrofluoric acid solution. A plurality of glass substrates 3 which have been prepared by the float method are dipped in the etchant 2 in an erected fashion.

It is preferable to remove the reducing heterogeneous layer of the glass substrate 3 by a depth of 5 to 14μm, and more preferably by 6 to 11 μm, by the etching. If the depth is 5μm or less, the entire reducing heterogeneous layer is not almost completely removed. On the other hand, even if the reducing heterogeneous layer is etched by more than 14μm, the coloring suppressing effect is not further enhanced, and rather, the surface of the glass substrate 3 becomes rough, which is not desirable.

A preferable temperature of the etchant 2 is between 10 to 30°C. It is preferable that the temperature of the etchant is high, since the etching rate increases so that the heterogeneous layer can be quickly removed by a desired amount. However, if the temperature exceeds 30°C, uneven etching is likely to occur on the the surface of the glass substrate 3 due to the surface of the glass substrate 3 being dried after the glass substrate 3 is taken out of the etchant 2.

It is preferable that the etchant 2 is composed of a hydrofluoric acid solution having a hydrofluoric acid concentration of 1 to 25%. Also, a preferable hydrofluoric acid etchant should contain at least one of a sulfuric acid solution, a nitric acid solution, or an acetic acid solution.

Further, it is preferable that the glass substrate 3 has a composition, by weight %, of 50 to 75% of $SiO_2$, 10 to 27% of RO, 1 to 15% of A1203, and 2 to 15% of $Na_2O$.

The reasons for limiting the composition of the glass substrate 3 as above is as follows (hereinafter, % refers to weight %):

$SiO_2$ acts as a network former for glass, and its preferable content is 50 to 75%. If the $SiO_2$ content is less than 50%, the glass has a lowered strain point, which leads to an increased heat contraction of the glass substrate during heat treatment of the manufacturing process of a plasma display, thereby unfavorably causing misregistration of patterns formed on the surface of the glass substrate 3. On the other hand, if the Si02 content is more than 75%, the glass substrate has a decreased thermal expansion coefficient so that warpage is prone to occur, since the substrate has a different thermal expansion coefficient with those of the insulating paste and a sealing frit etc. used in the display.

RO (MgO, CaO, SrO, BaO) facilitates the melting of the glass and also has the action of adjusting the thermal expansion coefficient of the same. Its preferable content is 10 to 27%. If the RO (MgO, CaO, SrO, BaO) content is less than 10%, the glass has a lowered strain point so that the glass substrate becomes easy to be deformed during the plasma display manufacturing process. On the other hand, if the RO content is more than 27%, the glass becomes prone to devitrification and becomes difficult to be formed by the float method.

A1203 acts to increase the strain point of the glass, and its preferable content is 1 to 15%. If the $Al_2O_3$ content is less than 1%, the strain point becomes too low, whereas, if the $Al_2O_3$ content is more than 15%, then the thermal expansion coefficient becomes too small.

$Na_2O$ acts to adjust the thermal expansion coefficient. If its content is less than 2%, then the thermal expansion coefficient becomes too small, whereas, if the $Na_2O$ content is more than 15%, the strain point becomes too low.

In addition to the above components, the glass may further contain other components in amounts which do not spoil the properties of the glass: specifically, $ZrO_2$ to improve the chemical durability of the glass, $LiO_2$ and $K_2O$ to adjust the thermal expansion coefficient, and Cl, $SO_3$, $SnO_2$, or the like as a defoaming agent.

In the above described embodiment, the reducing heterogeneous layer on the surface of the glass substrate 3 is removed by dipping the glass substrate in the etchant 2. However, as shown in FIG. 3, an etchant may be sprayed by spraying nozzles 13 onto one surface of a glass substrate 12 suspended from a stationary support rod 10 by hangers 11. Even this alternative embodiment can obtain the same effects as those of the above described embodiment.

Further, as shown in FIG. 4, an etchant may be sprayed onto a top surface of a glass substrate 31 conveyed on rollers 30, by an etchant spraying header 32 provided above the rollers 30. This alternative embodiment can also obtain the same effects as those of the above described embodiment.

EXAMPLES

Next, examples of the present invention will be explained.

Table 1 shows the compositions and properties of glass substrates A and B according to examples of the present invention.

TABLE 1

| COMPOSITION | GLASS SUBSTRATE A | GLASS SUBSTRATE B |
|---|---|---|
| $SiO_2$ | 59.0 | 73.0 |
| $Al_2O_3$ | 6.0 | 1.5 |
| MgO | 2.5 | 4.1 |
| CaO | 6.5 | 7.4 |
| SrO | 7.5 | - |
| BaO | 5.5 | - |
| $Na_2O$ | 4.5 | 13.2 |
| $K_2O$ | 8.5 | 0.8 |
| STRAIN POINT ($^\circ$C) | 575 | 500 |
| THERMAL EXPANSION COEFFICIENT ($\times 10^{-7}/^\circ$C) | 85 | 86 |
| LIQUID-PHASE TEMPERATURE ($^\circ$C) | 920 | 940 |

The glass substrates A and B in Table 1 were prepared from raw materials shown in Table 1 by mixing the raw materials so that compositions shown in Table 1 were obtained, then preparing from the mixed raw materials sheets of glass (sheet glass) having a thickness of 3mm by the float method, and then cutting the obtained sheets of glass into a size of 10mm in length and 10mm in width.

The glass substrate A has a high strain point of 575$^\circ$C, and when compared to the glass substrate B which has a strain point of 500$^\circ$C, the glass substrate A shows a smaller heat contraction when subjected to a heat treatment. The glass substrates A and B are not prone to devitrification because the glasses both have a liquid-phase temperature of less than 1050°C. The glass substrates A and B show thermal expansion coefficient values falling within a range of 85 to 86 x 10$^{-7}$/°C, which are commensurate with those of the insulating paste and sealing frit, which makes the substrates suitable for use in plasma display panels.

The values of strain point in Table 1 were obtained by measuring the strain point of the glass substrates A and B according to ASTM C336-71. The values of glass liquid-phase temperature were obtained by observation of the presence of devitrification after powders of the glasses having grain sizes of 297 to 500 μm were placed in a platinum boat and held in a temperature gradient furnace for 48 hours. Further, the values of thermal expansion coefficient were obtained by measuring average values of thermal expansion coefficient of the glasses at temperatures between 30 to 380°C, using a dilatometer.

Next, the glass substrates A and B in Table 1 were each dipped in the etchant 2 within the etchant dipping apparatus shown in FIG. 2, to thereby remove the reducing heterogeneous layers on the bottom surface and the top surface of the glass substrates A and B.

In the examples of the present invention, as shown in Table 2, the concentration of hydrofluoric acid (HF concentration) of the etchant 2 was set to 50%, 25%, 10%, 2%, and 0.5% at a treatment temperature of 15°C, and to 25%, 10% and 2% at a treatment temperature 30°C.

TABLE 2

| CONCENTRATION OF HF (%) | TREATMENT TEMPERATURE (°C) | ETCHING RATE (μm/mm) | RESULT OF ETCHING TREATMENT |
|---|---|---|---|
| 50 | 15 | 72 | STRONG REACTION |
| 25 | 15 | 13 | GOOD |
| 10 | 15 | 2.2 | GOOD |
| 2 | 15 | 0.6 | GOOD |
| 0.5 | 15 | 0.05 | LONG TREATMENT TIME |
| 25 | 30 | 200 | GOOD |
| 10 | 30 | 30 | GOOD |
| 2 | 30 | 1.0 | GOOD |

The results of the etching treatment were evaluated in terms of the etching rate (μm/min) to obtain evaluation results as shown in Table 2. It can be seen from Table 2 that when the concentration of hydrofluoric acid is 50% (treatment temperature: 15°C) there occurs a strong reaction, and when the concentration is 0.5% (treatment temperature: 15°C) the treatment takes too much time. Therefore, the concentration of hydrofluoric acid is preferably within the range of 1 to 25%, and more preferably within 2 to 25%.

For the etchant 2, a sulfuric acid solution may be added to a hydrofluoric acid solution. Table 3 shows results of etching treatments where sulfuric acid solutions of sulfuric acid concentrations of 50%, 20%, and 10% were added to hydrofluoric acid solutions of hydrofluoric acid concentrations of 0.5 to 25%.

TABLE 3

| CONCENTRATION (%) | | TREATMENT TEMPERATURE (°C) | ETCHING RATE (μm/min) | RESULT OF ETCHING TREATMENT |
|---|---|---|---|---|
| HF | $H_2SO_4$ | | | |
| 25 | 50 | 15 | 11 | GOOD |
| 10 | 50 | 15 | 2 | GOOD |
| 2 | 50 | 15 | 0.8 | GOOD |
| 0.5 | 50 | 15 | 0.1 | GOOD |
| 25 | 20 | 15 | 10 | GOOD |
| 10 | 20 | 15 | 2 | GOOD |
| 2 | 20 | 15 | 0.9 | GOOD |
| 0.5 | 20 | 15 | 0.1 | GOOD |

TABLE 3 (continued)

| CONCENTRATION (%) | | TREATMENT TEMPERATURE (°C) | ETCHING RATE (μm/min) | RESULT OF ETCHING TREATMENT |
|---|---|---|---|---|
| HF | H₂SO₄ | | | |
| 25 | 10 | 15 | 10 | GOOD |
| 10 | 10 | 15 | 2 | GOOD |
| 2 | 10 | 15 | 0.3 | GOOD |
| 0.5 | 10 | 15 | 0.1 | GOOD |

In each case, it was possible to substantially remove the tin while maintaining a smooth surface.

Further, for the etchant 2, a nitric acid solution may be added to a hydrofluoric acid solution. Table 4 shows results of etching treatments where nitric acid solutions of nitric acid concentrations of 20% and 10% were added to hydrofluoric acid solutions of hydrofluoric acid concentrations of 0.5 to 25%.

TABLE 4

| CONCENTRATION (%) | | TREATMENT TEMPERATURE (°C) | ETCHING RATE (μm/min) | RESULT OF ETCHING TREATMENT |
|---|---|---|---|---|
| HF | H₂SO₄ | | | |
| 25 | 20 | 15 | 9 | GOOD |
| 10 | 20 | 15 | 2 | GOOD |
| 2 | 20 | 15 | 0.9 | GOOD |
| 0.5 | 20 | 15 | 0.1 | GOOD |
| 25 | 10 | 15 | 9 | GOOD |
| 10 | 10 | 15 | 3 | GOOD |
| 2 | 10 | 15 | 1 | GOOD |
| 0.5 | 10 | 15 | 0.1 | GOOD |

In each case, it was possible to substantially remove the tin while maintaining a smooth surface.

FIG. 5 shows results of a measurement of the concentration of tin (Sn) present in the vicinity of the top surface of the glass substrate B, using the secondary ion mass spectrometer (SIMS) method.
According to the SIMS method, an analysis of the composition is performed by counting the number of Na ions while the surface of the glass substrate is cut by sputtering with argon.

It can be seen from FIG. 5 that tin is contained in an amount of 0.04 to 0.05 weight % in the surface of the glass substrate B, while at a depth of 6μm from the surface, the tin content is 0.005 weight % (a value regarded as a "background level", which refers to the limit of detection of the analysis device), and can be considered that there is substantially no tin present. The degree of penetration and diffusion of tin into the glass substrate B is determined by factors such as the viscosity of the glass substrate B when placed in the molten tin bath of the sheet manufacturing device using the float method, the composition of the glass, and the amount of tin.

Prior to etching the top surface, each of the glass substrates had its bottom surface coated with an adhesive film made of polyethylene, polypropylene or the like. Then, the glass substrates were subjected to etching. The bottom surface usually has numerous microscopic scratches which are invisible to the eyes, because the bottom surface is conveyed by rollers when passing through a cooling step or a cutting step after it is taken out of the molten tin bath of the sheet manufacturing device of the float method. However, by coating the bottom surface with the adhesive film, it is possible to prevent the microscopic scratches from increasing in both width and length when the scratches are etched with the hydrofluoric acid.

After etching, the glass substrates are washed to peel away the adhesive film.

Next, the surfaces of the glass substrates A and B were etched to various depths using a hydrofluoric acid etchant of a hydrofluoric acid concentration of 5%. Then, on the surfaces which were etched, a silver paste having a width of approximately lmm was printed at intervals of approximately 1mm by the screen printing method, followed by a heat treatment at 550°C for 1 hour, to thereby form silver electrode films. The coloring conditions of the obtained glass substrates were observed.

The relationship between the depth of removal of the surface by etching and the coloring of the silver electrodes of each glass substrate is shown in Table 5.

TABLE 5

| DEPTH FROM SURFACE (μm) | GLASS SUBSTRATE A | GLASS SUBSTRATE B |
|---|---|---|
| 2 | COLORING IN RUSSET × | COLORING IN RUSSET × |
| 5 | NO COLORING O | LIGHT BROWN COLORING △ |
| 6 | NO COLORING O | NO COLORING O |
| 11 | NO COLORING O | NO COLORING O |
| 14 | NO COLORING O | NO COLORING O |
| 17 | NO COLORING O | NO COLORING O |

The degree of coloring was evaluated by looking through the glass substrate from the side on which the silver electrodes were not formed, to observe the coloring conditions of the silver electrodes. The results of the observation are represented by three levels, O (no coloring), △ (slight coloring) and X (coloring), in which levels O and △ refer to such levels that the glass substrates can be practically used for PDPs.

According to Table 5, it is learned that when the glass substrates A and B were etched so that a depth of 6μm or more was removed, neither of the substrates showed coloring ; the glass substrate A did not show coloring when removed by a depth of 5 μm, however, the glass substrate B showed slight coloring when removed by the same depth, and when the surfaces were removed by a depth of 2μm, both the glass substrates A and B showed distinct coloring.

It can be gathered from these data that the reducing heterogeneous layers formed on the glass substrates have an average thickness between 5μm and 6μm.

Further, the glass substrates A and B in Table 1, which were etched on the top surfaces to remove a depth of 6μm, were then arranged in opposed relation to each other with the top surfaces facing inward. Next, a silver paste and an insulating paste were applied to the inner surfaces of these glass substrates, followed by burning the inner surfaces, to thereby form silver electrodes, dielectric layers, partition walls, and fluorescent elements etc. Then, the glass substrates were sealed together with a bonding glass having a low melting point, and a mixed gas of xenon and a main discharge gas of neon were charged into the resulting display to thereby prepare a plasma display as a discharge testing device.

Then, the thus prepared testing device was operated, to obtain a picture image with excellent transparency and color balance.

**Claims**

1.  A method of manufacturing a glass substrate for displays, comprising the steps of:

    preparing a glass substrate having surfaces including an upper surface and a lower surface by a float method; and
    removing at least a reducing heterogeneous layer formed on the upper surface of said glass substrate, out of reducing heterogeneous layers formed on the surfaces of said glass substrate, by etching using an etchant which is mainly composed of hydrofluoric acid.

2.  A method as claimed in claim 1, wherein said reducing heterogeneous layer is removed by a depth of 5 to 14μm.

3.  A method as claimed in claim 2, wherein said reducing heterogeneous layer is removed by a depth of 6 to 11μm.

4.  A method as claimed in any of claims 1 to 3, wherein said etching comprises dipping said glass substrate in said etchant.

5.  A method as claimed in claim 4, wherein said etchant has a temperature between 10 to 30°C.

**6.** A method as claimed in any of claims 1 to 3, wherein said etching comprises spraying said etchant at least on the upper surface of said glass substrate.

**7.** A method as claimed in any of claims 1 to 6, further including a step of coating the lower surface of said glass substrate with an adhesive film prior to said removing step, to thereby remove only the reducing heterogeneous layer formed on the upper surface of said glass substrate.

**8.** A method as claimed in any of claims 1 to 7, wherein said etchant comprises a hydrofluoric acid solution having a hydrofluoric acid concentration of 1 to 25%.

**9.** A method as claimed in any of claims 1 to 8, wherein said glass substrate has a composition, by weight %, of 50 to 75% of $SiO_2$, 10 to 27% of RO, 1 to 15% of $Al_2O_3$, and 2 to 15% of $Na_2O$.

**10.** A glass substrate for displays manufactured by preparing a glass substrate having surfaces including an upper surface by a float method, and removing at least a reducing heterogeneous layer formed on the upper surface of said glass substrate, out of reducing heterogeneous layers formed on the surfaces of said glass substrate, by etching using an etchant which is mainly composed of hydrofluoric acid.

**11.** A glass substrate for displays as claimed in claim 10, wherein only the reducing heterogeneous layer formed on the upper surface of said glass substrate is removed.

**12.** A glass substrate for displays as claimed in claim 10 or 11, wherein said glass substrate has a composition, by weight %, of 50 to 75% of $SiO2$, 10 to 27% of RO, 1 to 15% of $Al_2O_3$, and 2 to 15% of $Na_2O$.

**13.** A glass substrate for displays as claimed in any of claims 10 to 12, which is used for plasma display panels.

# FIG.1

21

20

## FIG.2A

## FIG.2B

EP 1 086 931 A1

# FIG.3A

# FIG.3B

EP 1 086 931 A1

EP 1 086 931 A1

# FIG.4

## *FIG.5*

**European Patent Office**

# EUROPEAN SEARCH REPORT

Application Number

EP 00 40 2646

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 199948<br>Derwent Publications Ltd., London, GB;<br>Class L03, AN 1999-566334<br>XP002155757<br>-& JP 11 246238 A (MITSUBISHI ELECTRIC CORP), 14 September 1999 (1999-09-14)<br>* abstract *<br>* figure 2 *<br>* paragraph '0031! *<br>--- | 1-6,<br>8-10,12,<br>13 | C03C15/00 |
| X | GB 1 019 415 A (PITTSBURGH PLATE GLASS COMPANY) 9 February 1966 (1966-02-09)<br>* abstract *<br>* page 1, line 12 – line 14 *<br>* page 1, line 38 – line 53 *<br>* page 2, line 13 – line 30 *<br>* page 2, line 53 – line 82 *<br>* page 3, line 14 – line 36 *<br>* page 3, line 71 – line 74 *<br>* page 3, line 87 – line 120 *<br>* page 4, line 110 – line 120 *<br>* claims *<br>--- | 1,4-12 | |
| X | DATABASE WPI<br>Section Ch, Week 199437<br>Derwent Publications Ltd., London, GB;<br>Class L01, AN 1994-299572<br>XP002155758<br>-& JP 06 227842 A (NIPPON SHEET GLASS CO LTD), 16 August 1994 (1994-08-16)<br>* abstract *<br>* figure 1 *<br>* paragraph '0016! *<br>----- | 1-6,<br>8-10,12 | |

**TECHNICAL FIELDS SEARCHED (Int.Cl.7)**

C03C

The present search report has been drawn up for all claims

| Place of search | Date of completion of the search | Examiner |
|---|---|---|
| THE HAGUE | 18 December 2000 | Grenette, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 00 40 2646

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2000

| Patent document cited in search report | Publication date | Patent family member(s) | Publication date |
|---|---|---|---|
| JP 11246238 A | 14-09-1999 | NONE | |
| GB 1019415 A | | BE 642301 A | 09-07-1964 |
| | | DE 1269300 B | |
| | | FR 1378752 A | 26-02-1965 |
| | | NL 302163 A | |
| JP 6227842 A | 16-08-1994 | NONE | |

For more details about this annex : see Official Journal of the European Patent Office, No. 12/82